# EUROPEAN PATENT APPLICATION

(11) **EP 4 683 047 A1**
(43) Date of publication of application: **21.01.2026**
(21) Application number: 24927664.3
(22) Date of filing: 26.12.2024
(51) Int. Cl.: H01M 10/658

(54) **BATTERY PACK AND VEHICLE COMPRISING SAME**

(30) Priority: 29.05.2024 KR 20240070070; 10.12.2024 KR 20240182433
(71) Applicant: LG Energy Solution Ltd., Seoul 07335 (KR)
(72) Inventor: PARK, Sojeong, Yuseoung-gu, Daejeon 34122 (KR); YANG, Jinoh, Yuseoung-gu, Daejeon 34122 (KR); JUNG, Inhyuk, Yuseoung-gu, Daejeon 34122 (KR); NAM, Jinsik, Yuseoung-gu, Daejeon 34122 (KR); CHUNG, Jaehun, Yuseoung-gu, Daejeon 34122 (KR); MOON, Dongjae, Yuseoung-gu, Daejeon 34122 (KR)
(74) Representative: Plasseraud IP
(86) International application number: PCT/KR2024/021179
(87) International publication number: WO 2025/249681

(57) **Abstract**

A battery pack includes a plurality of battery cells, a pack housing, and a filling portion. The pack housing accommodates the battery cells, and the filling portion is a space between the battery cells within the pack housing. In addition, the filling portion includes a resin layer and a foam layer.

The battery pack according to an embodiment includes the filling portion including the resin layer and the foam layer in an empty space within the pack, thereby preventing heat transfer and securing rigidity.

## Description

### [TECHNICAL FIELD]

The present disclosure relates to a battery pack, and more particularly, to a battery pack capable of preventing heat transfer between cells in a pack and securing rigidity.

### [BACKGROUND ART]

Unlike primary batteries that are not rechargeable, secondary batteries refer to batteries that may be charged and discharged and have been applied not only to portable devices but also to electric vehicles (EVs) and hybrid electric vehicles (HEVs) that are driven by an electric drive source.

Currently, the types of secondary batteries that have been widely used include lithium ion batteries, lithium polymer batteries, nickel cadmium batteries, nickel hydrogen batteries, nickel zinc batteries, etc. The operating voltage of these unit secondary battery cells, i.e., unit battery cells, is approximately 2.5 V to 4.6 V. Therefore, when a higher output voltage is required, a battery pack is configured by connecting a plurality of battery cells in series. In addition, a battery pack is configured by connecting a plurality of battery cells in parallel depending on the charge/discharge capacity required for the battery pack. Therefore, the number of battery cells included in the battery pack may be set to vary depending on the required output voltage or charge/discharge capacity.

In the case of configuring a battery pack by connecting a plurality of battery cells in series/parallel, it is common to, first, configure a battery pack including at least one battery cell, preferably, a plurality of battery cells, then, use at least one of these battery packs, and add other components to configure a battery pack. Here, the battery pack refers to a component in which a plurality of battery cells are connected in series or parallel, and the battery pack refers to a component in which a plurality of battery packs are connected in series or parallel to increase capacity and output, etc.

The battery pack is configured with a structure in which a plurality of battery cells are accommodated in a case, but if there is empty space in the case, it may be disadvantageous to the rigidity of the pack or the entire pack and to heat transfer.

### [SUMMARY]

### [TECHNICAL PROBLEMS]

According to an aspect of the present disclosure, the present disclosure provides a battery pack capable of preventing heat transfer and securing rigidity and an automobile including the same.

### [TECHNICAL SOLUTION]

Among aspects, a battery pack includes: a plurality of battery cells; a pack housing accommodating the battery cells; and a filling portion filling a space between the battery cells within the pack housing.

The filling portion may include a resin layer and a foam layer.

The resin layer may include a first resin layer and a second resin layer, and the foam layer may be disposed between the first resin layer and the second resin layer.

The battery pack may further include: a lower plate, wherein the battery cells are arranged on the lower plate.

The pack housing may include a bottom frame, the lower plate may be spaced apart from the bottom frame upwardly, and a venting space may be further included between the bottom frame and the lower plate.

The resin layer may include silicone resin.

The foam layer may be formed of urethane foam or polyurethane foam.

The battery pack may further include both side walls arranged within the pack housing, and the battery cell is disposed between the both side walls.

A thickness of the foam layer may be 2 to 4 times that of the first resin layer.

A thickness of the second resin layer may be 0.5 to 1.5 times that of the first resin layer.

The resin layer may be disposed above the foam layer.

A thickness of the resin layer may be 0.3 to 0.8 times that of the foam layer.

The battery cell may be a cylindrical cell.

The battery cells may form a plurality of rows, and a cooling tube through which coolant flows may be further included between two adjacent rows of the battery cells.

The battery cells may form a plurality of rows, and a support member supporting the battery cells may be further included between two adjacent rows of the battery cells.

### [ADVANTAGEOUS EFFECTS]

Therefore, the battery pack and the vehicle according to the present disclosure have the effect of preventing heat transfer and securing rigidity by filling empty space in the battery pack with resin and foam.

### [BRIEF DESCRIPTION OF THE DRAWING]

FIG. 1 is a perspective view of a battery pack according to an aspect of the present disclosure,
FIG. 2 is an exploded perspective view of the battery pack of FIG. 1,
FIG. 3 is a partial detailed view of a top frame of FIG. 1,
FIG. 4 is a diagram illustrating a cylindrical battery cell according to an aspect of the present disclosure,
FIG. 5 is a longitudinal cross-sectional view of the battery cell of FIG. 4,
FIG. 6 is a plan view of a battery pack according to another aspect of the present disclosure,
FIG. 7 is a partial plan view illustrating a battery cell housed in a battery pack according to another aspect of the present disclosure,
FIG. 8 is a longitudinal cross-sectional view of a battery pack according to another aspect of the present disclosure,
FIG. 9 is a partial detailed view of FIG. 8,
FIG. 10 is a longitudinal cross-sectional view of a battery pack according to another aspect of the present disclosure,
FIG. 11 is a partial detailed view of FIG. 10, and
FIG. 12 is a diagram illustrating an electric vehicle equipped with a battery pack according to an aspect of the present disclosure.

### [DETAILED DESCRIPTION]

The advantages and features of the present disclosure and the methods for achieving them will become apparent by referring to the aspects described in detail below together with the accompanying drawings. However, the present disclosure is not limited to the aspects disclosed below but may be implemented in various different forms, and these aspects are provided only to make the disclosure of the present disclosure complete and to fully inform those skilled in the art of the scope of the disclosure, and the present disclosure is defined only by the scope of the claims. Accordingly, in some aspects, well-known process steps, well-known device structures, and well-known techniques are not specifically described in order to avoid ambiguity in the interpretation of the present disclosure. Like reference numerals refer to like elements throughout the specification.

In the drawings, the thickness of layers, films, panels, regions, etc., are exaggerated for clarity. The various figures are thus not to scale. Like reference numerals designate like elements throughout the specification. It will be understood that when an element, such as a layer, film, region, or substrate, is referred to as being "on" another element, it may be directly on the other element or intervening elements may also be present. In contrast, when an element is referred to as being "directly on" another element, there are no intervening elements present. In addition, it will be understood that when an element, such as a layer, film, region, or substrate, is referred to as being "below" another element, it may be directly below the other element or intervening elements may also be present. In contrast, when an element is referred to as being "directly under" another element, there are no intervening elements present.

A structure of the battery pack 1000 according to the present disclosure will be described in detail with reference to the drawings.

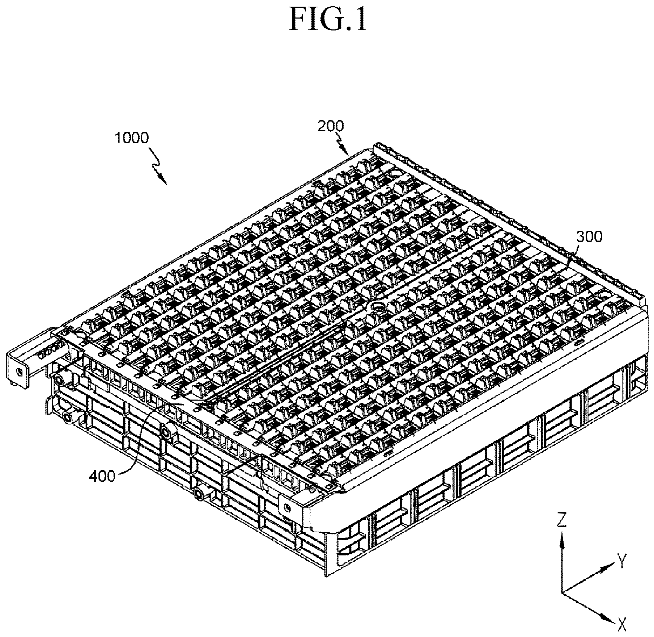

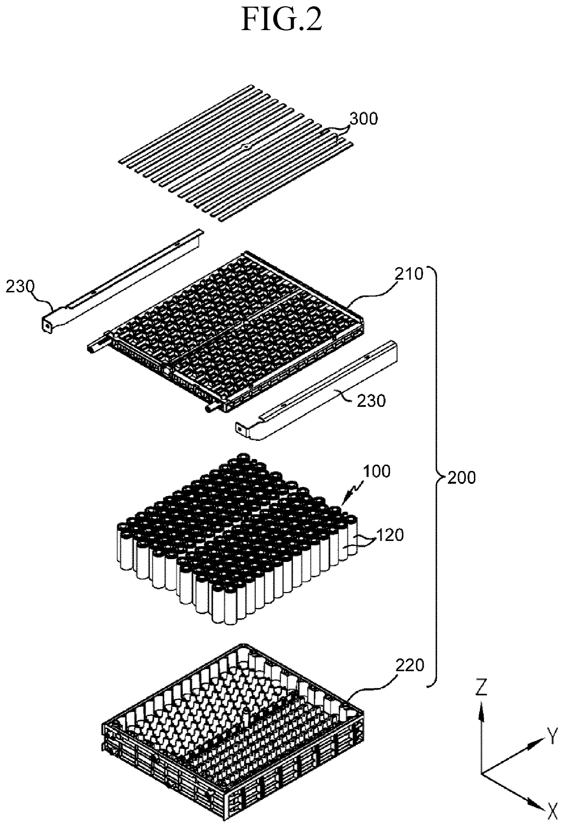

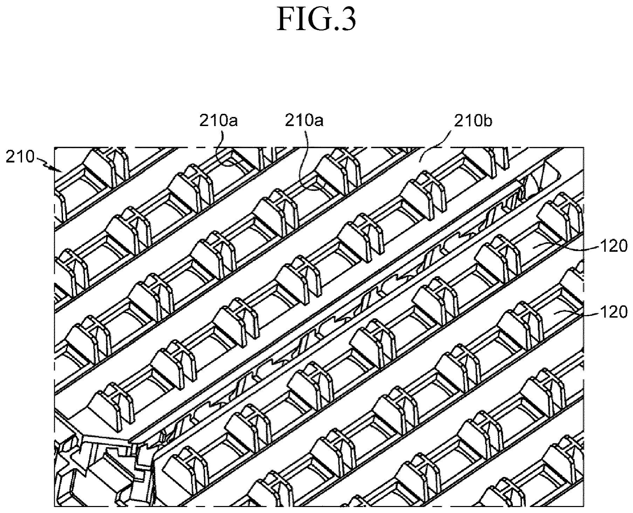

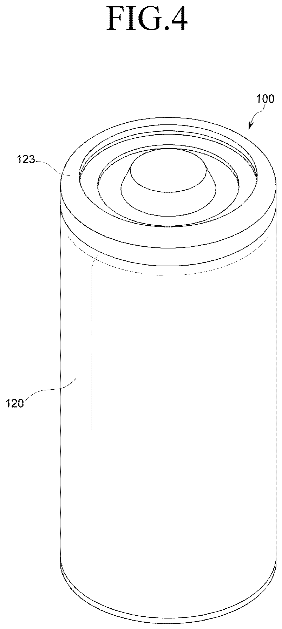

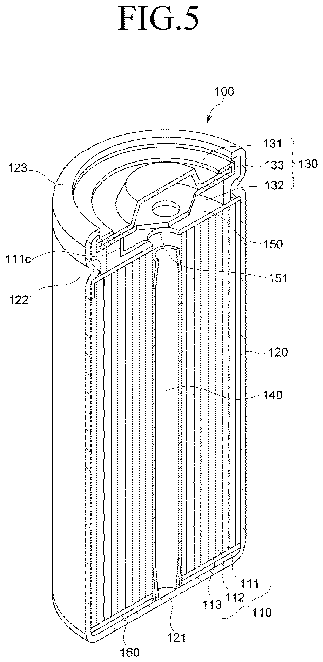

FIG. 1 is a perspective view of a battery pack according to an aspect of the present disclosure, FIG. 2 is an exploded perspective view of the battery pack of FIG. 1, FIG. 3 is a partial detailed view of a top frame in FIG. 1, FIG. 4 is a diagram illustrating a cylindrical battery cell according to an aspect of the present disclosure, and FIG. 5 is a longitudinal cross-sectional view of the battery cell in FIG. 4.

The battery pack 1000 may include a plurality of battery cells 100, a pack housing 200, a plurality of busbars 300, and may further include a sensing plate 400 connected to the busbars 300 and configured to sense the voltage of each cell 100.

The battery cell 100 may be a cylindrical battery cell 100 in which an electrode assembly 110 is built into a metal can.

As shown in FIGS. 4 and 5, the cylindrical battery cell 100 may include a jellyroll-shaped electrode assembly 110 and a battery case 120 for accommodating the electrode assembly 110, an upper insulating member 150 may be disposed at an upper end of the electrode assembly 110, and a lower insulating member 160 may be disposed at a lower end of the electrode assembly 110.

The electrode assembly 110 has a jellyroll-shaped structure in which a first electrode 111, a second electrode 113, and a separator 112 interposed therebetween are wound, and a center pin 140 may be inserted into the center thereof.

The cylindrical battery cell 100 may be formed by housing the electrode assembly 110 in the battery case 120, injecting an electrolyte into the battery case 120, and then coupling a cap assembly 130 to the top of the battery case 120. The battery case 120 is cylindrical, and the jelly-roll-shaped electrode assembly 110 may be housed in the cylindrical battery case 120 to implement a cylindrical secondary battery.

The battery case 120 may include a beading portion 122 and a crimping portion 123.

The beading portion 122 is for stable coupling of the cap assembly 130, and may be formed in a circumferential direction in an upper portion of the outer circumferential surface of the battery case 120 and may be formed to recess toward the center of the electrode assembly 110 on the outer circumferential surface of the battery case 120. The beading portion 122 may prevent flow of the electrode assembly 110.

The crimping portion 123 may be disposed above the beading portion 122 and wrap around the edge portion of the cap assembly 130 in the circumferential direction. The crimping portion 123 may promote stable coupling of the cap assembly 130.

The cap assembly 130 may include a upper cap 131 forming an electrode terminal, a cap plate 132 to which a first electrode tab extending upward from the electrode assembly 110 is connected, and a gasket 133 for maintaining sealing.

The upper cap 131 may form a positive terminal. The gasket 133 may be mounted on an upper inner surface of the clamping portion 123 and the beading portion 122 to increase sealing force between the cap assembly 130 and the battery case 120.

The first electrode tab 111c may extend upward from the electrode assembly 110. Specifically, the first electrode tab 111c may extend from the first electrode 111 of the electrode assembly 110. The first electrode tab 111c may be a positive electrode tab.

The first electrode tab 111c may be connected to the cap plate 132 so that the upper cap 131 may function as an electrode terminal (positive terminal). An opening 151 is formed in the upper insulating member 150, and the positive electrode tab may penetrate the opening 151 and be connected to the cap plate 132.

The center pin 140 generally includes a metal material to impart a predetermined strength and is formed as a cylindrical structure in which a plate is bent to be curved. In addition to self-heating, the center pin 140 may fix and support the electrode assembly 110 and function as a passage for releasing gas generated by an internal reaction during charging/discharging and operation.

The electrolyte injected into the battery case 120 may be a non-aqueous electrolyte containing a lithium salt, and the non-aqueous electrolyte containing a lithium salt includes a non-aqueous electrolyte and a lithium salt. As the non-aqueous electrolyte, a non-aqueous organic solvent, an organic solid electrolyte, an inorganic solid electrolyte, etc. are used but are not limited thereto.

The upper cap 131 in the upper portion of the battery case 120 may be connected to a positive tab of the electrode assembly 110 and may function as a positive terminal, and the battery case 120 may be connected to a negative tab of the electrode assembly 110 and may function as a negative terminal.

The cylindrical battery cell 100 may be inserted and disposed in the pack housing 200, and the cylindrical battery cells 100 may be wire-bonded with busbars 300 in a predetermined pattern so as to be connected in series and/or in parallel with each other.

Meanwhile, the present disclosure should not necessarily be interpreted as the battery pack 1000 using the cylindrical battery cell 100, and for example, the battery pack 1000 according to the present disclosure may be configured using a can-shaped battery cell having a rectangular parallelepiped shape or other shapes than a cylindrical shape.

The pack housing 200 is a structure for accommodating and fixing the battery cells 100 therein and protecting the battery cells 100 from external impact or vibration, and in the case of the present aspect, the pack housing 200 may include a bottom frame 220 and a top frame 210.

The bottom frame 220 may be formed in a square box shape, and the battery cells 100 may be accommodated inside the outer perimeter of the bottom frame 220. The battery cells 100 may be arranged so that the upper cap 131 faces upward and the bottom of the battery case 120 faces downward.

The bottom frame 220 may be firmly coupled to the top frame 210 by a hook fastening and a long bolt (not shown), etc.

The top frame 210 covers an upper region of the battery cells 100 and may be configured to be mutually coupled with the bottom frame 220.

For example, the top frame 210 may be configured so that the upper regions of all battery cells 10 accommodated in the bottom frame 220 are covered by the top frame 21.

In addition, the top frame 210 may include an upper surface portion covering the upper portion of the entire battery cells 100 and four side surface portions forming a wall surrounding the outer portion of the entire battery cells 100 together with the bottom frame 220, and the upper surface portion of the top frame 210 may be provided with a number of holes 210a and mounting grooves 210b as shown in FIG. 3. A side plate 230 may be coupled to the side surface portion of the top frame 210.

The holes 210a may be formed by partially perforating the top frame 210 so that the upper caps 131 of the battery cells 100 or the upper ends of the battery cases 120 may be partially exposed to the outside.

As illustrated in FIG. 3, the battery cells 100 in the bottom frame 220 may be configured to form multiple rows in the X-axis or Y-axis direction of the pack housing 200, and when the battery cells 100 are covered with the top frame 210, the upper cap 131 of each battery cell 100 or the top of the battery case 120 may be configured to be exposed to the outside.

These holes 210a are used as passages to connect the battery cells 100 located inside the pack housing 200 to the busbars 300 located outside the pack housing 200 with metal wires. For example, the busbar 300 may be connected to the top of the upper cap 131 or the battery case 120 exposed through the holes 210a with a metal wire. For example, a wire bonding method in which one end of the metal wire is ultrasonically welded to the top of the upper cap 131 or the battery case 120 and the other end of the metal wire is ultrasonically welded to the busbar 300 may be adopted.

The mounting grooves 210b are places where the busbar 300 is mounted and fixed and may extend in the length direction (Y-axis direction) of the pack housing 200 and may be provided at predetermined intervals in the width direction (X-axis direction) of the pack housing 200. The busbar 300, which is a metal conductor having a horizontal width matched to each of the mounting grooves 210b, may be disposed.

The busbar 300 may have approximately the same horizontal width as that of the mounting groove 210b, so that flow may be prevented in the width direction (X-axis direction).

In addition, a pin or pillar that protrudes (in the Z-axis direction) may be provided on the surface of the mounting groove 210b, and a pin hole into which a pin of the mounting groove 210b is inserted may be disposed on the busbar 300. Accordingly, the pin of the mounting groove 210b may be inserted into the pin hole of the busbar 300, so that movement may be prevented.

The busbar 300 may be bonded to the mounting groove 210b of the top frame 210 using an adhesive, such as glue.

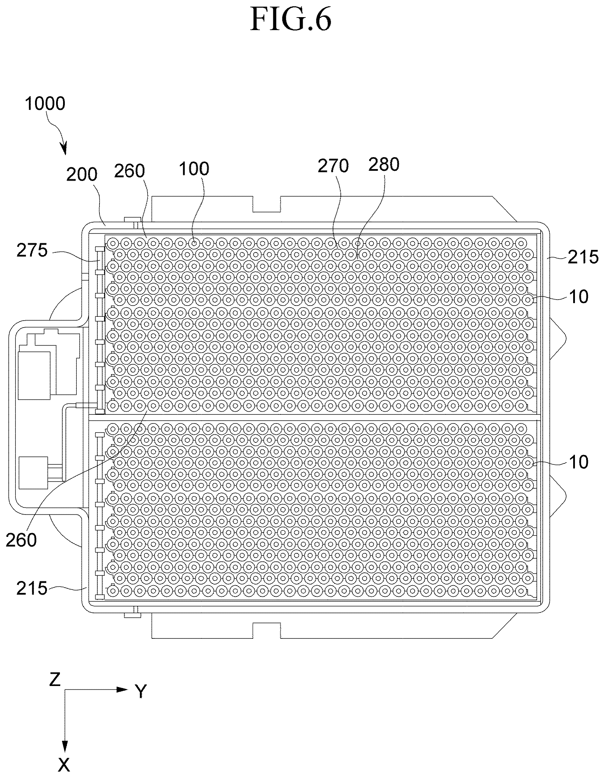

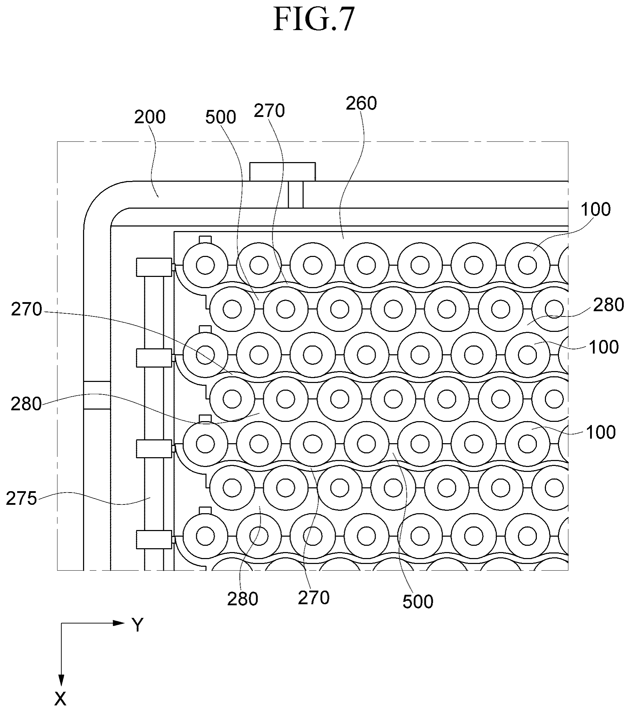

FIGS. 6 and 7 are diagrams illustrating the battery pack 1000 in another aspect of the present disclosure. FIG. 6 is a plan view of a battery pack in another aspect of the present disclosure, and FIG. 7 is a partial plan view illustrating a battery cell stored in a battery pack in another aspect of the present disclosure.

In another aspect of the present disclosure, the battery pack 1000 may include a plurality of battery cells 100 and a pack housing 200 and may further include a coolant moving pipe 275 through which a coolant for cooling the battery cells 100 moves.

The battery cells 100 may be accommodated in the pack housing 200, and the pack housing 200 may be a structure for protecting the battery cells 100 from external impact or vibration. The pack housing 200 may include a bottom frame 220, a side wall 215, and a top frame 210.

The bottom frame 220 may be disposed at the bottom of the pack housing 200 and may be formed, for example, in a square plate shape. The bottom frame 220 may be disposed at the bottom of the battery cells 100. The battery cells 100 may be disposed so that the upper cap 131 faces upward and the bottom of a battery case 120 faces downward.

The side wall 215 may be disposed in the circumferential direction of the bottom frame 210 at the edge of the bottom frame 220.

The top frame 210 may cover an upper region of the battery cells 100 and may be configured to be mutually coupled to the bottom frame 220.

A plurality of battery cells 100 may be disposed within the pack housing 200 to form a battery cell assembly 10.

The battery cell assembly 10 may include a plurality of battery cells 100. In the present aspect, a plurality of battery cell assemblies 10 may be arranged in the pack housing 200, and FIG. 6 illustrates an example in which two battery cell assemblies 10 are arranged in the pack housing 200.

The battery cell assembly 10 may be arranged on a lower plate 250. In addition, both side walls 260 may be arranged on both sides of the battery cell assembly 10. The both side walls 260 may be arranged to face both edges of the lower plate 250. The side walls 260 may extend in the length direction of the battery cell assembly 10 and may be coupled to the pack housing 200.

Accordingly, the battery cell assembly 10 may be disposed on the lower plate 250 between both side walls 260; and the lower plate 250, both side walls 260, and the plurality of battery cells 100 may form one battery cell assembly 10 as one set. In addition, a filling portion 500 may be disposed between both side walls 260 forming one battery cell assembly 10.

The lower plate 250 may be disposed at a predetermined distance from the bottom frame 220 of the pack housing 200.

The bottom frame 220 may include a plurality of convex portions 221 formed to be convex upwardly. The convex portions 221 may be formed integrally as the entire thickness of the bottom frame 220 is bent to be convex upwardly.

The lower plate 250 may be mounted on the plurality of convex portions 221, and a venting space S may be formed between the bottom frame 220 and the lower plate 250. Therefore, by forming the venting space between the lower plate 250 and the bottom frame 220, gas may move and be discharged through the venting space (S) when a fire occurs.

The lower plate 250 may be formed in an approximately rectangular shape, and a plurality of battery cells 100 may be arranged in a plurality of rows on the square-shaped lower plate 250, as shown in FIGS. 6 and 7.

In FIGS. 6 and 7, the battery cells 100 of the first row may be arranged from the left to the right in the length direction (Y-axis direction) right below the side wall 260 (in the drawing). Also, the battery cell 100 of the second row may be arranged below (e.g., offset) the battery cell 100 of the first row in the drawing, and each of the battery cells 100 of the second row may be arranged between two battery cells 100 of the first row.

Also, a cooling tube 270 may be disposed between the battery cell 100 of the first row and the battery cell 100 of the second row.

The cooling tube 270 may extend along one row of the battery cell 100 (Y-axis direction), and a flow path through which a coolant flows may be formed inside the cooling tube 270. The cooling tube 270 may be connected to a coolant movement pipe 275. In the present aspect, the cooling tube 270 may be disposed between the first row and the second row of the battery cell 100 to cool the side surfaces of the battery cells 100 of the first row and the second row. Also, the cooling tube 270 may be formed in a meandering manner along a portion of an outer circumferential surface of the battery cell 100 of the first row and a portion of the outer circumferential surface of the battery cell 100 of the second row.

The battery cell 100 of the third row may be disposed below the battery cell 100 of the second row, and each of the battery cells 100 of the third row may be disposed between two battery cells 100 of the second row.

Also, a support member 280 may be arranged between the battery cell 100 of the second row and the battery cell 100 of the third row.

The support member 280 may extend along one row of the battery cell 100 (Y-axis direction) and may be formed in a zigzag shape as illustrated. The support member 280 may have a lower end disposed on the lower plate and an upper end extending to the upper end of the battery cell 100 or the top frame 210.

The support member 280 may be disposed between two rows of battery cells 100 to fix the battery cells 100 and secure the rigidity of the battery pack 1000.

The battery cells 100 of the fourth row may be disposed below the battery cells 100 of the third row, and the cooling tube 270 may be disposed between the third and fourth rows of the battery cells 100. The cooling tube 270 between the third and fourth rows of the battery cells 100 may cool the battery cells 100 of the third row through one side thereof and may cool the battery cells 100 of the fourth row through the other side thereof.

In this manner, the cooling tube 270 may be disposed between odd and even rows of battery cells 100, and two rows of battery cells on both sides of the cooling tube 270 are cooled through one side and the other side of the cooling tube 270.

Also, the support member 280 may be disposed between the even and odd rows of the battery cells 100.

In this manner, the plurality of battery cells 100 constituting the battery cell assembly 10 may be arranged between both side walls 260, and the battery cells 100 of the first row, the second row, ..., nth row may be arranged sequentially from one side wall 260 toward the opposite side wall 260. Also, the cooling tube 270 and the support member 280 may be arranged alternately between the plurality of rows of the battery cells 100.

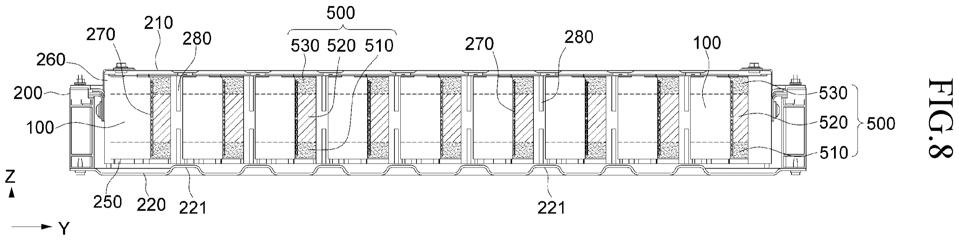

Also, in an aspect of the present disclosure, the filling portion 500 may fill an empty space between the battery cells 100. As shown in FIGS. 8 to 11, the filling portion 500 may include resin layers 510, 530, and 540 and foam layers 520 and 550 and may be formed by stacking the resin layers 510, 530, and 540 and the foam layers 520 and 550.

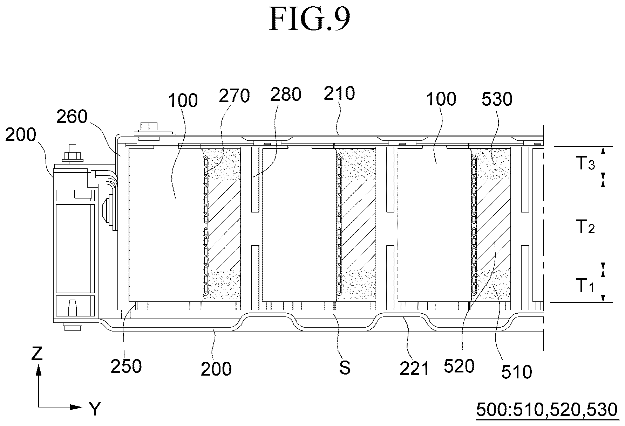

In FIGS. 8 and 9, the filling portion 500 may include a first resin layer 510, a foam layer 520, and a second resin layer 530 between the battery cells 100 from the bottom up.

The first resin layer 510 is disposed at the bottom of the filling portion 500 and may be disposed on the lower plate 250 on which the battery cell 100 is mounted. In the formation of the first resin layer 510, a molten resin may flow into the space between the battery cells 100 to fill the space between the battery cells 100 and the resin filling may harden to form the first resin layer 510. The first resin layer 510 may be formed of, for example, a silicone resin and may include a silicone resin. The first resin layer 510 may also be disposed in the form of a resin pad.

The foam layer 520 is disposed in the middle of the filling portion 500 and may be disposed on the upper side of the first resin layer 510. The foam layer 520 may be formed of a foam, and may be formed of, for example, a resin foam, a urethane foam, or a polyurethane foam.

A thickness T2 of the foam layer 520 may be about 2 to 4 times a thickness T1 of the first resin layer 510, and preferably may be about 3 times a thickness T1 of the first resin layer 510. Due to this ratio of the foam layer 520 to the resin layers 510 and 530, sufficient structural rigidity of the pack may be secured, while heat transfer to the upper and lower portions may be prevented by the resin layer 510 and 530.

The foam layer 520 of urethane foam or polyurethane foam may play a large role in securing fixation between elements and structural rigidity of the pack as a hard material having high hardness. In addition, the foam layer 520 may cushion external impact, and thus improve vibration resistance and impact resistance of the pack 1000.

The second resin layer 530 is disposed in an upper portion of the filling portion 500 and may be disposed above the foam layer 520. The formation of the second resin layer 530 may be similar to the first resin layer 510. That is, a molten resin may flow from the foam layer 520 into the space between the battery cells 100 to fill the space between the battery cells 100, and the resin filling may be hardened to form the second resin layer 530. The second resin layer 530 may be formed of, for example, a silicone resin and may include a silicone resin. The second resin layer 530 may be disposed in the form of a resin pad. An upper end of the second resin layer 530 may be in contact with a lower surface of the top frame 210.

A thickness T3 of the second resin layer 530 may be about 0.5 to 1.5 times the thickness T1 of the first resin layer 510 and may be the same as or similar to the thickness T1 of the first resin layer 510.

The thickness ratio of the first resin layer 510, the foam layer 520, and the second resin layer 530 in the filling portion 500 may be, for example, 1:3:1.

In the present aspect, the filling portion 500 fills the space between the battery cells 100, and the filling portion 500 includes the first and second resin layers 510 and 530 having flame retardant performance and the foam layer 520 therebetween,so that thermal propagation may be prevented based on the flame retardant performance, and at the same time, the rigidity of the pack may be secured.

In addition, if the foam layer 520 is filled to the top of the pack, there is a risk in the process because it is difficult to manage the foaming rate. However, when the second resin layer 530 is disposed on top of the foam layer 520, the process difficulty may be resolved while having the effects of protecting the upper welding portion and preventing corrosion.

In addition, when the first resin layer 510 is disposed on the bottom of the battery cell 100 and cell venting occurs at the bottom, introduction of flames and high-temperature particles to adjacent cells may be blocked, thereby preventing thermal propagation. The first resin layer 510 may also cover the bottom surface of the battery cell 100.

Since the cooling tube 270 or the support member 280 is disposed between the battery cells 100, the filling portion 500 may fill not only the space between the cells 100, but also the space between the cooling tube 270 and the cell or between the support member 280 and the cell 100, as shown.

Also, the resin layer 510 and 530 may increase heat dissipation efficiency.

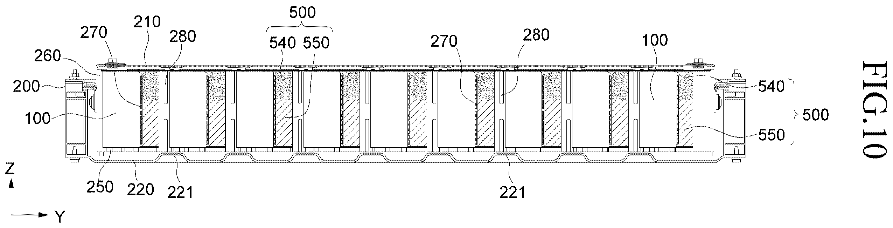

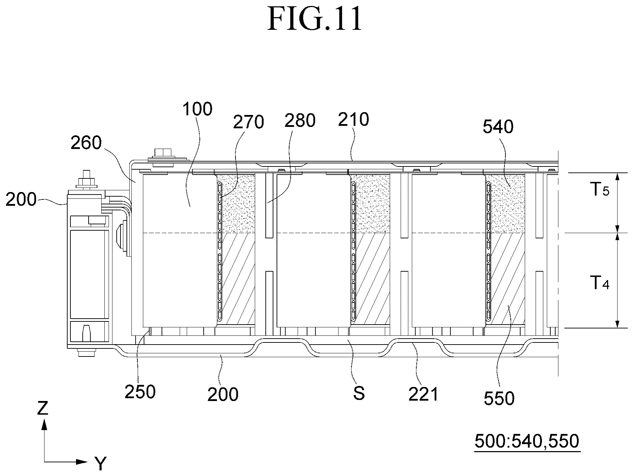

Meanwhile, FIGS. 10 and 11 illustrate the filling portion 500 according to another aspect of the present disclosure. FIG. 10 is a longitudinal cross-sectional view of a battery pack according to another aspect of the present disclosure, and FIG. 11 is a partial detailed view of FIG. 10.

In FIGS. 10 and 11, the filling portion 500 may include a foam layer 550 and a resin layer 540 from the bottom up.

In the present aspect, the foam layer 550 may be disposed in a lower portion of the filling portion 500 and may be disposed on the lower plate 250 on which the battery cell 100 is installed. The configuration of the foam layer 550 may be the same as the foam layer 520 of the aspect. That is, the foam layer 550 may be made of foam and may be formed of, for example, urethane foam or polyurethane foam.

In the present aspect, when the foam layer 550 is disposed in the lower portion of the cell 100, a thermal runaway prevention effect may be achieved by securing sufficient venting space (S) between the bottom frame 220 and the lower plate 250 while ensuring rigidity. In addition, the foam layer 550 may improve the vibration resistance and impact resistance by alleviating external impact.

The resin layer 540 may be disposed in an upper portion of the filling portion 500 and may be disposed on the upper side of the foam layer 520. The formation of the resin layer 540 may be similar to the first resin layer 510 or the second resin layer 530. That is, a molten resin may flow into the space between the battery cells 100 on the foam layer 550 to fill the space between the battery cells 100, and the resin filling may be hardened to form the resin layer 540. The composition of the resin layer 540 may be the same as or similar to the first resin layer 510 or the second resin layer 530. That is, the resin layer 540 may be formed of, for example, a silicone resin and may include a silicone resin. The resin layer 540 may be disposed in the form of a resin pad. The upper end of the resin layer 540 may be in contact with the lower surface of the top frame 210.

If the foam layer 550 fills to the upper end portion in the space between the battery cells 100, it is difficult to manage the flatness and foaming rate and it is difficult to sufficiently and evenly cover the upper surface of the cell 100. In the present aspect, the resin layer 540 is disposed in the upper portion of the foam layer, thereby solving this problem, and thermal propagation may be prevented based on flame retardancy.

A thickness T5 of the resin layer 540 may be about 0.3 to 0.8 times the thickness T4 of the foam layer 550 and may be about 2/3 of the thickness T4 of the foam layer 550. In this manner, since the foam layer 550 is formed thicker than the resin layer 540, there is an advantage in terms of rigidity and an advantage in terms of cost. In the present aspect, with this ratio of the resin layer 540 and the foam layer 550, rigidity may be secured and thermal runaway prevention function may be stably implemented.

The thickness ratio of the resin layer 540 and the foam layer 550 in the filling portion 500 may be, for example, 2:3. As another example, the resin layer 540 may be disposed below and the foam layer 550 may be disposed above the resin layer 540 in the filling portion 500.

The thickness of the filling portion 500 may be the same as or similar to the height of the battery cell 100. In other words, the thickness of the filling portion 500 may be smaller or larger than the height of the battery cell 100.

In another aspect of the present disclosure, the filling portion 500 includes the resin layer 540 and the foam layer 550, thereby preventing thermal propagation based on flame retardancy and, at the same time, securing the rigidity of the pack 1000.

The battery pack 1000 may additionally include various control and protection systems, such as a battery management system (BMS), and the battery pack 2000 may be applied to various devices. Specifically, the battery pack 1000 may be applied to means of transportation, such as an electric bicycle, an electric car, a hybrid car, or an energy storage system (ESS), but is not limited thereto and may be applied to various devices that may use secondary batteries.

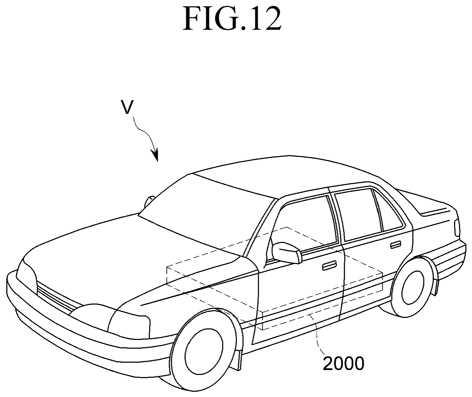

FIG. 12 is a diagram illustrating an electric vehicle V equipped with the battery pack 1000. In the electric vehicle V, the wheels are driven by a motor that receives power from the battery pack 1000 so that the electric vehicle may be operated.

The present disclosure has been described with reference to aspects as described above, but is not limited to the above aspects, and various changes and modifications may be made by those skilled in the art within the scope that does not depart from the spirit of the present disclosure.

### [INDUSTRIAL APPLICABILITY]

The present disclosure may provide a battery pack and an automobile that may prevent heat transfer and secure rigidity by filling a blank space in a battery pack with resin and foam together.

## Claims

1. A battery pack comprising:
a plurality of battery cells;
a pack housing accommodating the plurality of battery cells; and
a filling portion defining a space between the plurality of battery cells within the pack housing.

2. The battery pack of claim 1, wherein
the filling portion includes a resin layer and a foam layer.

3. The battery pack of claim 2, wherein
the resin layer includes a first resin layer and a second resin layer, and
the foam layer is disposed between the first resin layer and the second resin layer.

4. The battery pack of claim 2, further comprising:
a lower plate,
wherein the plurality of battery cells are arranged on the lower plate.

5. The battery pack of claim 4, wherein
the pack housing includes a bottom frame and a venting space,
wherein the lower plate is spaced apart from the bottom frame upwardly, and
wherein the venting space is defined between the bottom frame and the lower plate.

6. The battery pack of claim 2, wherein
the resin layer includes a silicone resin.

7. The battery pack of claim 2, wherein
the foam layer includes one of a urethane foam or a polyurethane foam.

8. The battery pack of claim 2, further comprising:
side walls arranged within the pack housing, and
wherein the plurality of battery cells is disposed between the side walls.

9. The battery pack of claim 3, wherein
a thickness of the foam layer is an amount in a range of 2 to 4 times a thickness of the first resin layer.

10. The battery pack of claim 9, wherein
a thickness of the second resin layer is an amount in a range of 0.5 to 1.5 times the thickness of the first resin layer.

11. The battery pack of claim 2, wherein
the resin layer is disposed above the foam layer with respect to a lower plate of the battery pack.

12. The battery pack of claim 11, wherein
a thickness of the resin layer is an amount in a range of 0.3 to 0.8 times a thickness of the foam layer.

13. The battery pack of claim 1, wherein
each of the plurality of battery cells is a cylindrical cell.

14. The battery pack of claim 1, further comprising a cooling tube,
wherein the plurality of battery cells define a plurality of rows, and
wherein the cooling tube, through which a coolant is configured to flow, is disposed between adjacent rows of the plurality of rows.

15. The battery pack of claim 1, further comprising a support member,
wherein the plurality of battery cells define a plurality of rows, and
wherein the support member is disposed between adjacent rows of the plurality of rows.
